Europäisches Patentamt

European Patent Office

Office européen des brevets

(11) Numéro de publication : **0 332 040 B1**

# (12) FASCICULE DE BREVET EUROPEEN

(45) Date de publication du fascicule du brevet :
**02.09.92 Bulletin 92/36**

(51) Int. Cl.⁵ : **B61D 3/16,** B61D 3/00,
B61D 47/00, B60P 3/00

(21) Numéro de dépôt : **89103598.2**

(22) Date de dépôt : **01.03.89**

(54) **Wagon pour le transport d'objets en plaques sur chevalet.**

(30) Priorité : **07.03.88 FR 8802852**

(43) Date de publication de la demande :
**13.09.89 Bulletin 89/37**

(45) Mention de la délivrance du brevet :
**02.09.92 Bulletin 92/36**

(84) Etats contractants désignés :
**AT BE CH DE ES FR GB GR IT LI LU NL SE**

(56) Documents cités :
**EP-A- 0 032 471
DE-C- 74 760
DE-U- 8 715 395
FR-A- 1 289 139
US-A- 4 127 071**

(73) Titulaire : **A.B.R.F. - ATELIERS BRETONS DE
REALISATIONS FERROVIAIRES
Z.I. Rue Lafayette
F-44141 Chateaubriant Cedex (FR)**
Titulaire : **SAINT GOBAIN VITRAGE
INTERNATIONAL
"Les Miroirs" 18, avenue d'Alsace
F-92400 Courbevoie (FR)**

(72) Inventeur : **Barbier, Serge
SAINT GOBAIN VITRAGE La Glacerie de
Chantereine
F-60150 Thourotte (FR)**
Inventeur : **Moyat, Daniel
c/o SAINT GOBAIN SGAT 18, avenue d'Alsace
F-92400 Courbevoie (FR)**
Inventeur : **Jastrzebski, Jean c/o ATELIER
BRETON
DE REPARATION FERROVIAIRE Z.i. rue
Lafayette
F-44141 Chateaubriant Cédex (FR)**

(74) Mandataire : **Weinmiller, Jürgen et al
Lennéstrasse 9 Postfach 24
W-8133 Feldafing (DE)**

EP 0 332 040 B1

Jouve, 18, rue Saint-Denis, 75001 PARIS

## Description

La présente invention concerne un wagon de chemin de fer pour le transport d'objets en plaques sur chevalet.

On connaît par le certificat d'addition français 2 482 031, un wagon de coordination technique rail-route comportant un châssis muni à chacune de ses extrémités d'un élément support roulant, le châssis étant scindé en deux demi-châssis qui sont reliés entre eux par des moyens de liaison désassemblables, chaque demi-châssis comprenant à l'une de ses extrémités un dit élément support roulant et à son autre extrémité, dite extrémité de séparation, un dispositif support roulant auxiliaire escamotable.

Le document DE-U-87/15395 décrit un véhicule routier conçu pour le transport de verre en plaques comprenant un châssis dont les côtés latéraux portent chacun, longitudinalement, un longeron sur lequel repose le chevalet supportant les plaques de verre.

La présente invention a pour but de proposer un wagon de chemin de fer aménagé pour le transport d'objets en plaques sur chevalet, permettant la coordination avec un véhicule routier. En particulier l'invention s'applique pour le transport de verre en plaques.

L'invention a ainsi pour object un wagon de chemin de fer pour le transport d'objets en plaques sur chevalet, comportant un châssis muni à chacune de ses extrémités d'un élément support roulant, ledit châssis étant scindé en deux demi-châssis qui sont reliés entre eux par des moyens de liaison désassemblables, chaque demi-châssis comprenant à l'une de ses extrémités un dit élément support roulant, et à son autre extrémité, dite extrémité de séparation, un dispositif support roulant auxiliaire escamotable, caractérisé en ce que chaque demi-châssis se prolonge au-delà de son extrémité munie d'un dit élément support roulant, de deux brancards latéraux dont les extrémités libres sont réunies par des moyens de rigidification constitués par des arceaux de liaison dont le passage libre au-dessus du niveau des rails est supérieur à la hauteur totale du chevalet, lesdits deux brancards latéraux étant en outre équipés de moyens de support du chevalet montés sur vérins permettant de soulever à partir du sol ou d'abaisser jusqu'au sol ledit chevalet.

Selon une autre caractéristique, les extrémités libres de chaque demi-châssis comportent des moyens de maintien longitudinaux du chevalet.

Selon une autre caractéristique, chaque demi-châssis est recouvert d'une enveloppe-caisse reposant sur les brancards et sur la partie du demi-châssis située du côté de l'élément support roulant reliant lesdits brancards.

Selon une autre caractéristique, chaque brancard de chaque demi-châssis est muni de moyens de soulèvement de ladite enveloppe-caisse de façon à ce que en position haute de ladite enveloppe-caisse la distance séparant l'extrémité supérieure interne de ladite enveloppe-caisse du niveau supérieur de la partie du demi-châssis reliant les deux brancards soit au moins égale à la hauteur totale dudit chevalet.

Selon une autre caractéristique, chaque enveloppe-caisse comporte à son sommet un capot longitudinal ouvrant qui s'étend sur au moins la moitié de la longueur de l'enveloppe-caisse, du côté de l'extrémité des supports roulants.

Selon une autre caractéristique, chaque brancard est équipé de poteaux verticaux à pans extérieurs inclinés de façon à servir d'appui à ladite enveloppe-caisse dans sa position basse fermée, les flancs latéraux de ladite enveloppe-caisse étant en outre équipés de vessies gonflables s'appuyant dans leur état gonflé contre les objets en plaques portés par ledit chevalet, assurant leur maintien latéral.

Selon une réalisation particulière, lesdites vessies gonflables sont fixées contre des supports liés à ladite enveloppe-caisse, lesdits supports étant enfilés et coulissant sur lesdits poteaux verticaux, lesdits poteaux subissant en réaction la poussée exercée par lesdites vessies contre lesdits objets en plaques.

On va maintenant donner la description d'un exemple particulier de mise en oeuvre de l'invention en se reportant au dessin annexé dans lequel :

La figure 1 est une vue schématique, en élévation d'un wagon selon l'invention.

La figure 2 est une vue de dessus de la figure 1.

La figure 3 montre le wagon en position désassemblée.

La figure 4 montre schématiquement en vue agrandie de dessus le demi-châssis de gauche de la figure 3 sans son enveloppe-caisse.

Les figures 5A, 6A et 7A sont des coupes schématiques transversales selon V, VI et VII de la figure 4.

Les figures 5B, 6B et 7B correspondent aux figures 5A, 6A et 7A, mais dans des positions correspondant au déchargement du wagon.

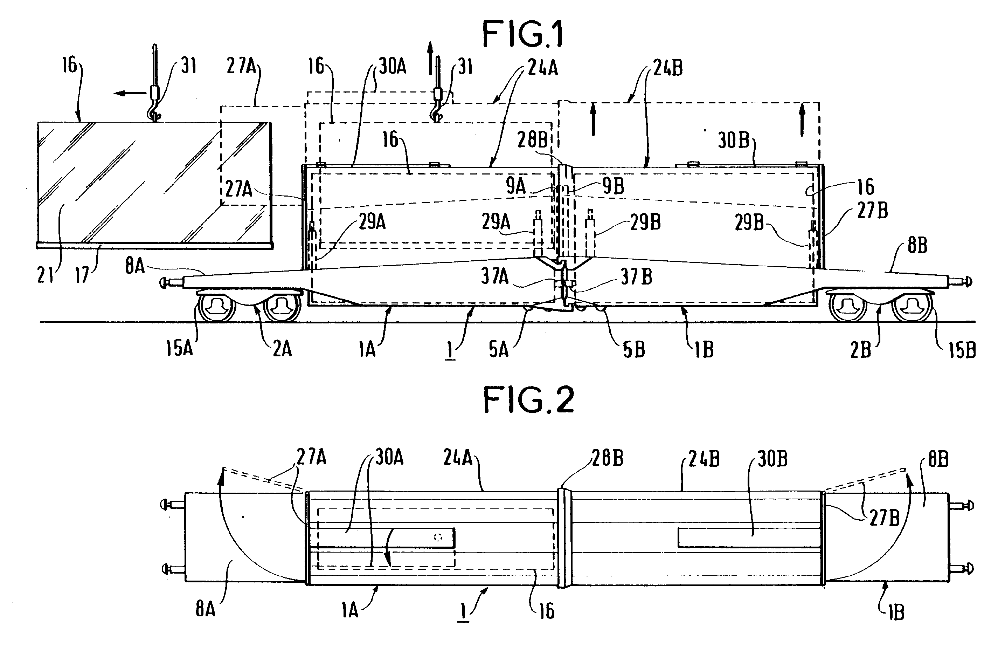

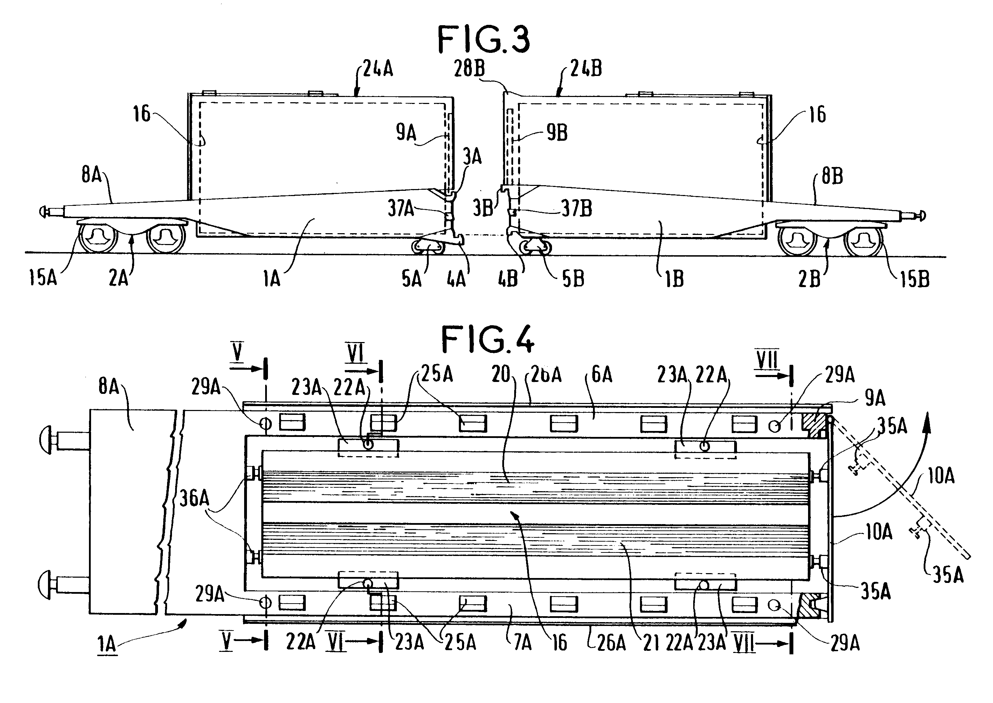

En se référant aux figures, le wagon selon l'invention comprend un châssis 1 constitué de deux demi-châssis 1A et 1B. Le châssis 1 est muni à chacune de ses extrémités d'un élément support roulant 2A, 2B, tel qu'un bogie. Sur la figure 1, les deux demi-châssis sont assemblés. Sur la figure 3, ils sont désassemblés. L'assemblage des deux demi-châssis est réalisé au moyen d'organes de liaison désassemblables comprenant des organes d'assemblage hauts 3A et 3B et des organes d'assemblage bas 4A et 4B. Ces organes d'assemblage maintiennent fermement les deux demi-châssis l'un contre l'autre empêchant la flexion centrale du wagon. Il en résulte un effort de compression sur le châssis aux organes d'assemblage hauts 3A et 3B et un effort de traction sur le chassis aux organes d'assemblage bas 4A et 4B. Ces organes d'assemblage fonctionnent par simple emboîtement des organes 3B et 4B en forme de crochet dans les organes 3A et 4A disposés en sens inverse.

Du côté de l'extrémité de séparation, chaque demi-châssis comporte un dispositif support roulant auxiliaire escamotable 5A, 5B permettant, comme on le voit sur la figure 3, de supporter les extrémités, côté séparation, des demi-châssis 1A et 1B lorsqu'ils sont séparés. Lorsque les deux demi-châssis sont assemblés, comme sur la figure 1, ces dispositifs supports auxiliaires 5A et 5B sont relevés.

Dans la suite, on ne décrit que le demi-châssis 1A, en affectant les références de l'indice A, sachant que le châssis 1B est identique au châssis 1A.

Sur les figures 1, 2 et 3 où le wagon est représenté en entier avec ses deux parties, les références des organes se rapportant à la partie 1B sont toutes affectées de l'indice B.

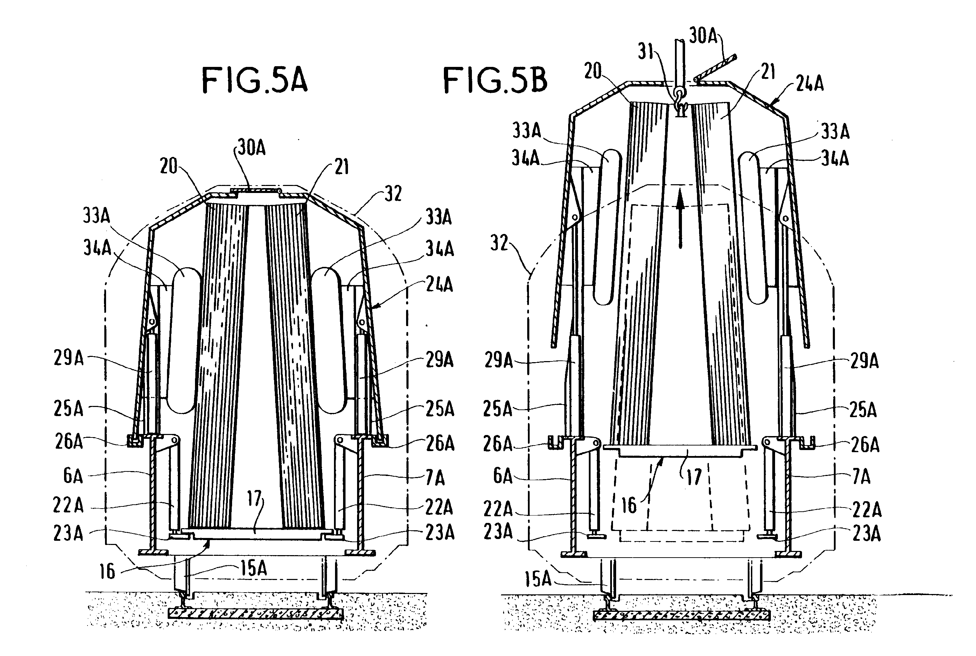

Le châssis 1A comprend donc deux brancards 6A et 7A qui prolongent la partie du châssis 8A, munie du bogie 2A. Cette partie de châssis 8A assure la liaison rigide entre les deux brancards 6A et 7A. Comme le montrent les figures 5 à 7, ces brancards sont formés de poutres à section en I.

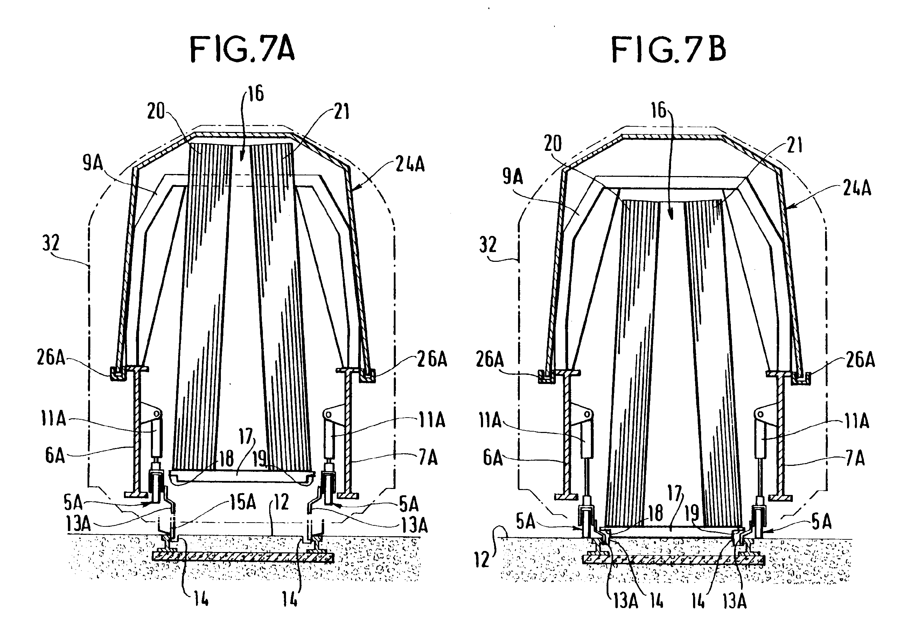

Les extrémités libres, ou ouvertes, des brancards, côté séparation, sont réunies par un arceau de liaison 9A visible sur les figures 7A, 7B et aussi sur les figures 1 et 3 en traits pointillés. En outre, un portillon ouvrant 10A relie également, en position fermée, ces extrémités libres des brancards 6A et 7A. Ce portillon n'est visible que sur la figure 4. Sa hauteur correspond à celle des brancards à cette extrémité.

Comme le montrent les figures 7A et 7B, les deux dispositifs supports roulants auxiliaires escamotables 5A sont chacun fixés au bout d'une tige de vérin 11A lui-même fixé à son brancard 6A, (7A). Pour le désassemblage des deux demi-châssis 1A et 1B, les roues du dispositif 5A du châssis 1A sont descendues jusqu'au sol, sur une partie de voie bétonnée 12. On procède de la même manière pour les roues du dispositif 5B du châssis 1B, mais en poursuivant la course des vérins 11B de façon à soulever légèrement l'extrémité libre des brancards 6B et 7B pour permettre le désencastrement des organes d'assemblage 3B et 4B par rapport aux organes d'assemblage 3A et 4A. Les deux demi-châssis sont ensuite écartés. Comme on le voit sur les figures 7A et 7B, les dispositifs auxiliaires roulants escamotables 5A sont munis d'un ergot de guidage 13A qui, en position descendue de ces dispositifs, pénètre dans la rainure 14 de dégagement de boudin de roue 15A, pratiquée dans la voie bétonnée.

Avant de poursuivre la description du demi-châssis 1A et de ses accessoires, on va décrire brièvement le chargement destiné à être transporté par le wagon de l'invention, en se reportant par exemple aux figures 1 et 7B. Il s'agit d'un chevalet 16 en forme de V renversé muni d'un plancher 17 dont les côtés latéraux se prolongent au-dessus de son extrémité la plus basse, par des ailes 18 et 19, permettant à des organes de levage de soulever le chevalet en le prenant par dessous ces ailes. Ce chevalet est destiné à supporter deux paquets 20 et 21 de plaques de verre. Il pourrait s'agir également d'autres matériaux en plaques.

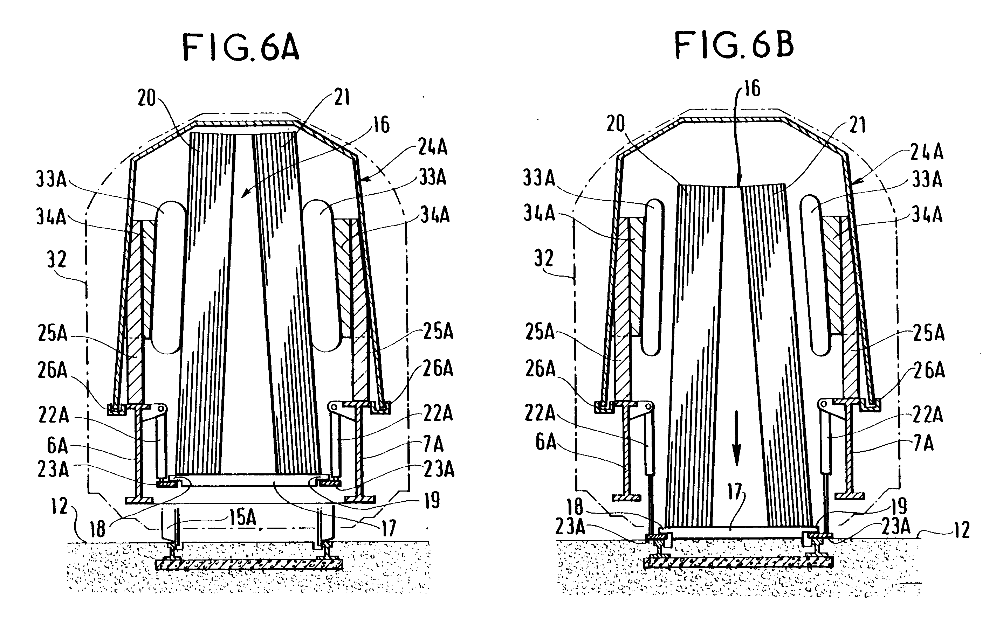

Revenant maintenant à la description du châssis, il a été dit plus haut que l'extrémité libre des brancards 6A, 7A est réunie par un arceau de liaison 9A (figures 7A et 7B). L'espace libre au-dessous de cet arceau, c'est-à-dire jusqu'au niveau des rails ou de la voie bétonnée 12, est supérieur à la hauteur totale du chevalet 16 de façon à permettre, lorsque celui-ci repose sur la voie bétonnée 12 comme le montre la figure 7A, au demi-châssis 1A de s'en aller laissant seul le chevalet sur la voie, permettant sa reprise par un camion, ou au contraire de permettre au demi-châssis de venir en sens inverse se placer autour du chevalet. Au cours de ces opérations, le portillon 10A est, bien entendu, ouvert. En se reportant maintenant aux figures 6A, 6B et 4, on voit que les brancards 6A et 7A sont chacun munis de deux vérins de levage 22A. L'extrémité de la tige de chaque vérin porte une plaque support 23A. Ces organes de levage permettent de soulever à partir du sol la charge par les ailes 18 et 19 du chevalet 16 et de la maintenir en position de transport. Ils permettent en outre la dépose au sol de la charge pour le déchargement.

Enfin, le demi-châssis 1A est muni d'une enveloppe-caisse 24A. Cette enveloppe-caisse s'appuie sur des poteaux 25A (figure 6A), six poteaux par brancards, fixés verticalement sur les brancards, et aussi sur l'arceau 9A (figure 7A) et repose d'une façon étanche, d'une part dans une gouttière 26A solidaire de l'extrémité supérieure des brancards, et d'autre part sur la partie 8A du châssis reliant les brancards à leur extrémité côté bogie 2A. Les poteaux 25A, ainsi que l'arceau 9A ont des pans extérieurs inclinés assurant l'appui de l'enveloppe-caisse par ses flancs latéraux. Côté bogie 2A, l'enveloppe-caisse 24A comporte une porte 27A, figurée sur la figure 2, tandis que du côté séparation, l'enveloppe-caisse est béante et sans porte. Comme on le voit sur les figures 1 et 2, l'enveloppe-caisse 24B du demi-châssis 1B comprend un évasement 28B à son extrémité séparation de façon à venir recouvrir l'extrémité homologue de séparation de l'enveloppe-caisse 24A. Une fois les deux demi-châssis 1A et 1B assemblés, les deux enveloppes-caisses 24A et 24B constituent un espace interne unique reposant d'une manière étanche sur le châssis et comportant à ses extrémités des portes 27A et 27B.

En se référant maintenant aux figures 5A et 5B, les brancards 6A et 7A sont munis de vérins de levage 29A de l'enveloppe-caisse 24A. Chaque brancard comporte deux vérins 29A. Les axes de ces vérins sont référencés sur la figure 4. L'enveloppe-caisse 24A comporte en outre à son sommet un capot longitudinal 30A, ouvrant, qui s'étend depuis la porte 27A jusqu'à au moins la moitié de la longueur des brancards 6A, 7A comme on le voit sur la figure 2. Ce capot ouvrant permet le passage d'un crochet 31 d'un appareil de levage pour permettre le soulèvement du chevalet 16, comme le montre la figure 5B, l'enveloppe-caisse 24A étant en position haute, et la sortie du chevalet par la porte 27A en le passant au-dessus de la partie 8A du châssis 1A. Cette manoeuvre est figurée sur la figure 1.

Cette manoeuvre de chargement, ou de déchargement par le dessus est une autre possibilité d'utilisation du wagon. Dans ce dernier cas, il n'est pas nécessaire de séparer les deux demi-châssis 1A et 1B. Elle permet le chargement et le déchargement dans les endroits où il n'y a pas de voies bétonnées. Bien entendu, les vérins 29A doivent avoir une course suffisante pour qu'en position haute de l'enveloppe-caisse 24A, telle que représentée figure 5B, la distance qui sépare l'extrémité supérieure interne de l'enveloppe-caisse, du niveau supérieur de la partie 8A du demi-châssis, soit au moins égale à la hauteur totale du chevalet 16.

Sur les figures 5 à 7, on a représenté en traits mixtes fins 32 le gabarit des voies de chemin de fer. Lors du soulèvement de l'enveloppe-caisse 24A, on dépasse ce gabarit, mais cela n'a pas d'importance car il ne s'agit que de manoeuvre à poste fixe.

L'enveloppe-caisse 24A est encore munie sur ses flancs latéraux, de douze vessies gonflables 33A, six de chaque côté. Ces vessies gonflables sont fixées contre des supports 34A eux-mêmes liés à l'enveloppe-caisse 24A. Ces supports 34A sont chacun enfilés sur un poteau vertical 25A et peuvent coulisser le long de ces poteaux lors de la montée et de la descente de l'enveloppe-caisse 24A.

Une fois le chargement effectué, les vessies gonflables 33A sont gonflées et elles viennent s'appuyer contre les paquets 20 et 21 de plaques de verre, assurant ainsi leur maintien latéral. Les poteaux 25A subissent en réaction la poussée de ces vessies par l'intermédiaire de leur support 34A coulissant évitant ainsi que les efforts ne s'exercent sur l'enveloppe-caisse 24A. Sur les figures 5A et 6A, on voit le chevalet 16 en position de transport avec les paquets 20 et 21 calés par les vessies 33. Sur les figures 5B et 6B, les vessies sont dégonflées. La figure 5B montre un déchargement par le haut au moyen du crochet 31 et la figure 6B un déchargement par dépose au sol avec séparation des deux demi-châssis.

Le calage longitudinal des paquets 20 et 21 est effectué au moyen de tampons 35A et 36A fixés respectivement au portillon 10A (figure 4) et contre la partie 8A du demi-châssis réunissant les deux brancards. Comme on le voit sur les figures 1 et 3, l'extrémité des brancards comporte, de chaque côté, des logements 37A et 37B permettant, à titre de sécurité, et une fois les deux demi-châssis assemblés, d'y introduire un axe. Cet axe coulisse librement et ne subit normalement aucun effort.

Ainsi, le wagon selon l'invention permet la coordination technique rail-route pour le transport de chevalets porteurs de paquets de plaques de verre, par simple dépose du chevalet au milieu d'une voie bétonnée, sans aucun moyen de levage extérieur, en séparant simplement les deux demi-châssis ; un camion à châssis en fourche et à roues montées sur vérin permettant de hausser ou d'abaisser le châssis venant directement sur la voie chercher ou déposer le chevalet. Le wagon permet également le chargement et le déchargement sans séparation des deux demi-châssis, en utilisant un moyen de levage extérieur 31. Pour cela, on soulève les enveloppes-caisses 24A et 24B, on hisse la charge par le crochet 31 et on l'extrait vers l'extrémité du wagon en ouvrant la porte 27A (ou 27B). Le wagon peut transporter deux chevalets : un par demi-châssis.

**Revendications**

1/ Wagon de chemin de fer pour le transport d'objets en plaques sur un chevalet (16), comportant un châssis (1) muni à chacune de ses extrémités d'un élément support roulant (2A, 2B), ledit châssis étant scindé en deux demi-châssis (1A, 1B) qui sont reliés entre eux par des moyens de liaison désassemblables (3A, 3B, 4A, 4B), chaque demi-châssis comprenant à l'une de ses extrémités un dit élément support roulant (2A, 2B), et à son autre extrémité, dite extrémité de séparation, un dispositif support roulant auxiliaire escamotable (5A, 5B), caractérisé en ce que chaque demi-châssis se prolonge au-delà de son extrémité munie d'un dit élément support roulant (2A, 2B), de deux brancards latéraux (6A, 7A) dont les extrémités libres sont réunies par des moyens de rigidification constitués par des arceaux de liaison dont le passage libre au-dessus du niveau des rails est supérieur à la hauteur totale du chevalet (16), lesdits deux brancards latéraux (6A, 7A) étant en outre équipés de moyens (23A) de support du chevalet (16) montés sur vérins (22A) permettant de soulever à partir du sol ou d'abaisser jusqu'au sol ledit chevalet (16).

2/ Wagon selon la revendication 1, caractérisé en ce que les extrémités libres de chaque demi-châssis (1A, 1B) comportent des moyens de maintien longitudinal (35A) du chevalet.

3/ Wagon selon l'une des revendications 1 ou 2, caractérisé en ce que les extrémités libres des brancards supportent un portillon ouvrant (10A) qui les relie quand il est fermé.

4/ Wagon selon la revendication 3, caractérisé en ce que lesdits moyens de maintien longitudinal de la charge sont constitués par des tampons (35A) fixés sur ledit portillon (10A).

5/ Wagon selon l'une des revendications 2 à 4, caractérisé en ce que des tampons (36A) de maintien longitudinal des chevalets sont portés par la partie de chaque demi-châssis située du côté de l'élément support roulant (2A, 2B) et réunissant entre eux les deux brancards.

6/ Wagon selon l'une des revendications précédentes, caractérisé en ce que chaque demi-châssis est recouvert d'une enveloppe-caisse (24A, 24B) reposant sur les brancards et sur la partie (8A, 8B) du demi-châssis située du côté de l'élément support roulant reliant lesdits brancards.

7/ Wagon selon la revendication 6, caractérisé en ce que l'extrémité de l'enveloppe-caisse située du côté de l'extrémité libre des brancards est béante, ladite extrémité de l'une (24A) des deux enveloppes-caisses comportant un évasement (28B) permettant de s'encastrer légèrement en position assemblée des deux demi-châssis dans ladite extrémité de l'autre (24B) enveloppe-caisse.

8/ Wagon selon l'une des revendications 6 ou 7, caractérisé en ce que chaque brancard (6A, 7A) de chaque demi-châssis est muni de moyens de soulèvement (29A) de ladite enveloppe-caisse de façon à ce que en position haute de ladite enveloppe-caisse, la distance séparant l'extrémité supérieure interne de ladite enveloppe-caisse du niveau supérieur de la partie (8A) du demi-châssis reliant les deux brancards soit au moins égale à la hauteur totale dudit chevalet (16).

9/ Wagon selon l'une des revendications 6 à 8, caractérisé en ce que chaque enveloppe-caisse comporte à son sommet un capot longitudinal (30A, 30B) ouvrant qui s'étend sur au moins la moitié de la longueur de l'enveloppe-caisse, du côté de l'extrémité des supports roulants (2A, 2B).

10/ Wagon selon l'une des revendications précédentes, caractérisé en ce que chaque brancard est équipé de poteaux verticaux (25A) à pans extérieurs inclinés de façon à servir d'appui à ladite enveloppe-caisse (24A) dans sa position basse fermée, les flancs latéraux de ladite enveloppe-caisse étant en outre équipés de vessies gonflables (33A) s'appuyant, dans leur état gonflé contre les objets en plaques portés par ledit chevalet, assurant leur maintien latéral.

11/ Wagon selon l'une des revendications précédentes, caractérisé en ce que lesdites vessies gonflables sont fixées contre des supports (34A) liés à ladite enveloppe-caisse, lesdits supports étant enfilés et coulissant sur lesdits poteaux verticaux (25A), lesdits poteaux subissant en réaction la poussée exercée par lesdites vessies contre lesdits objets en plaques.

**Patentansprüche**

1. Waggon zum Transport von plattenförmigen Gegenständen auf einem Bock (16), mit einem Chassis (1), das an jedem seiner Enden mit einem rollenden Trägerelement (2A, 2B) ausgestattet ist, wobei das Chassis in zwei Halbchassis (1A, 1B) aufgeteilt ist, die miteinander über trennbare Verbindungsmittel (3A, 3B, 4A, 4B) verbunden sind, und wobei jedes Halbchassis an einem seiner Enden ein solches rollendes Trägerelement (2A, 2B) und an seinem anderen Ende, Trennende genannt, eine rollende einziehbare Hilfs-Trägervorrichtung (5A, 5B) aufweist, dadurch gekennzeichnet, daß jedes Halbchassis sich über sein mit einem rollenden Trägerelement (2A, 2B) versehenes Ende hinaus durch zwei Seiten-Längsträger (6A, 7A) verlängert, deren freie Enden durch Versteifungsmittel verbunden werden, die aus Verbindungsbügeln bestehen, deren freier Durchgang oberhalb der Schienenhöhe größer als die Gesamthöhe des Bocks (16) ist, wobei die beiden seitlichen Längsträger (6A, 7A) weiter mit Mitteln (23A) zum Tragen des Bocks (16) ausgestattet sind, die auf Hubzylindern (22A) montiert sind, welche es ermöglichen, diesen Bock (16) vom Boden anzuheben oder zum Boden abzusenken.

2. Waggon nach Anspruch 1, dadurch gekennzeichnet, daß die freien Enden jedes Halbchassis (1A, 1B) Mittel (35A) zum Halten des Bocks in Längsrichtung aufweisen.

3. Waggon nach einem der Ansprüche 1 oder 2, dadurch gekennzeichnet, daß die freien Ende der Längsträger eine zu öffnende Tür (10A) tragen, die sie verbindet, wenn sie geschlossen ist.

4. Waggon nach Anspruch 3, dadurch gekennzeichnet, daß die Mittel für den Halt der Ladung in Längsrichtung aus Puffern (35A) bestehen, die an der Tür (10A) befestigt sind.

5. Waggon nach einem der Ansprüche 2 bis 4, dadurch gekennzeichnet, daß Puffer (36A) für den Halt der Böcke in Längsrichtung von dem Teil jedes der Halbchassis getragen werden, der sich auf der Seite des rollenden Trägerelements (2A, 2B) befindet und die beiden Längsträger miteinander verbindet.

6. Waggon nach einem der vorhergehenden Ansprüche, dadurch gekennzeichnet, daß jedes Halbchassis mit einer Wagenkastenhülle (24A, 24B) bedeckt ist, die auf den Längsträgern und dem Teil (8A, 8B) des Halbchassis ruhen, der sich auf der Seite des rollenden Trägerelements befindet, das diese Längsträger verbindet.

7. Waggon nach Anspruch 6, dadurch gekennzeichnet, daß das Ende der Wagenkastenhülle auf der Seite des freien Endes der Längsträger offen ist, wobei dieses Ende einer (24A) der beiden Wagenkastenhüllen eine Ausweitung (28B) aufweist, die es ermöglicht, daß sie sich in der zusammengebauten Stellung dr beiden Halbchassis auf das Ende der anderen Wagenkastenhülle (24B) aufschiebt.

8. Waggon nach einem der Ansprüche 6 oder 7, dadurch gekennzeichnet, daß jeder Längsträger (6A, 7A) jedes Halbchassis mit Mitteln (29A) zum Anheben der Wagenkastenhülle versehen ist, so daß in der oberen Stellung der Wagenkastenhülle der Abstand zwischen dem inneren oberen Ende der Wagenkastenhülle und dem oberen Niveau des Teils (8A) des Halbchassis, das die beiden Längsträger verbindet, mindestens gleich der Gesamthöhe des Bocks (16) ist.

9. Waggon nach einem der Ansprüche 6 bis 8, dadurch gekennzeichnet, daß jede Wagenkastenhülle an ihrer Decke eine zu öffnende Längsluke (30A, 30B) aufweist, die sich auf der Seite des Endes der rollenden Träger (2A, 2B) über mindestens die Hälfte der Länge der Wagenkastenhülle erstreckt.

10. Waggon nach einem der vorhergehenden Ansprüche, dadurch gekennzeichnet, daß jeder Längsträger mit senkrechten Tragpfosten (25A) mit schrägen Außenflächen versehen ist, um die Wagenkastenhülle (24A) in ihrer unteren geschlossenen Stellung zu stützen, wobei die Seitenflanken der Wagenkastenhülle weiter mit aufblasbaren Kissen (33A) versehen sind, die sich im aufgeblasenen Zustand gegen die vom Bock getragenen plattenförmigen Gegenstände drücken und ihren seitlichen Halt bewirken.

11. Waggon nach einem der vorhergehenden Ansprüche, dadurch gekennzeichnet, daß diese aufblasbaren Kissen an Trägern (34A) befestigt sind, die mit der Wagenkastenhülle verbunden sind, wobei diese Träger auf die senkrechten Tragpfosten (25A) aufgezogen sind und an ihnen gleiten und wobei die Pfosten als Reaktion den von den Kissen gegen die glasförmigen Gegenstände ausgeübten Druck auffangen.

**Claims**

1. Rail-road wagon for transporting sheet material on trestles (16) comprising a chassis (1) provided at each end with a rolling support member (2A, 2B), said chassis being divided into two half-chassis (1A, 1B) joined together by separable coupling means (3A, 3B, 4A, 4B), each half-chassis comprising at one end one of said rolling support members (2A, 2B) and its other, so-called separation end a retractable auxiliary rolling support device (5A, 5B), characterised in that each half-chassis is extended beyond its end provided with one of said rolling support members (2A, 2B) by two lateral side-sills (6A, 7A) whose free ends are joined by stiffening means in the form of joining hoops whose open space above the level of the rails is taller than the total height of the trestle (16), said two lateral side-sills (6A, 7A) being further provides with means (23A) for supporting the trestle (16) mounted on jacks (22A) enabling said trestle (16) to be raised off the ground or lowered to the ground.

2. Rail-road wagon according to claim 1 characterised in that the free ends of each half-chassis (1A, 1B) comprise means (35A) for longitudinal retention of the trestle.

3. Rail-road wagon according to claim 1 or claim 2 characterised in that the free ends of the side-sills support an openable gate (10A) which links them when it is closed.

4. Rail-road wagon according to claim 3 characterised in that said longitudinal load retaining means comprise buffers (35A) fixed to said gate (10A).

5. Rail-road wagon according to any one of claims 2 to 4 characterised in that buffers (36A) for longitudinal retention of the trestles are carried by the part of each half-chassis at the end at which the rolling support member (2A, 2B) joins the two side-sills together.

6. Rail-road wagon according to any one of the preceding claims characterised in that each half-chassis is covered by a body-cover (24A, 24B) resting on the side-sills and on the part (8A, 8B) of the half-chassis at the end at which the rolling support member joins said side-sills together.

7. Rail-road wagon according to claim 6 characterised in that the end of the body-cover at the free end of the side-sills is open, said open end of one (24A) of the two body-covers comprising a tapering portion (28B) adapted to be nested slightly into said end of the other body-cover (24B) in the assembled together position of the two half-chassis.

8. Rail-road wagon according to claim 6 or claim 7 characterised in that each side-sill (6A, 7A) of each half-chassis is provided with means (29A) for lifting said body-cover so that in a raised position of said body-cover the distance between the inside top of said body-cover and the top of the part (8A) of the half-chassis joining the two side-sills together is at least equal to the total height of said trestle (16).

9. Rail-road wagon according to any one of claims 6 to 8 characterised in that each body-cover comprises at its top an openable longitudinal cover (30A, 30B) extending over at least half the length of the body-cover from the rolling support (2A, 2B) end.

10. Rail-road wagon according to any one of the preceding claims characterised in that each side-sill is fitted with vertical posts (25A) with inclined exterior flanks adapted to support said body-cover (24A) in its closed lowered position, the lateral flanks of said body-envelope being further provided with inflatable airbags (33A) resting when inflated against the sheet materials carried by said trestle to retain them laterally.

11. Rail-road wagon according to any one of the preceding claims characterised in that said inflatable airbags are fixed against supports (34A) joined to said body-cover, said supports being threaded over and slidable on said vertical posts (25A), said posts absorbing the reaction force to the thrust exerted by said airbags against said sheet materials.

FIG.1

FIG.2

# FIG.3

# FIG.4

EP 0 332 040 B1

# FIG.5A

# FIG.5B

EP 0 332 040 B1

FIG.6A

FIG.6B

EP 0 332 040 B1

FIG.7A

FIG.7B